# EUROPEAN PATENT SPECIFICATION

(11) **EP 2 915 610 B1**
(45) Date of publication and mention of the grant of the patent: **10.07.2019**
(21) Application number: 13850065.7
(22) Date of filing: 28.10.2013
(51) Int. Cl.: B21J 15/14, B21J 15/28, B21J 15/32, B29C 65/56, F16B 5/02, B64F 5/00, B29K 105/06, F16B 5/04

(54) **FASTENING CONTROL SYSTEM FOR COMPOSITE MEMBER, AND FASTENING CONTROL METHOD FOR COMPOSITE MEMBER**
BEFESTIGUNGSSTEUERUNGSSYSTEM FÜR EIN VERBUNDBAUTEIL UND BEFESTIGUNGSSTEUERUNGSVERFAHREN FÜR EIN VERBUNDELEMENT
SYSTÈME DE CONTRÔLE DE FIXATION POUR ÉLÉMENT COMPOSITE, ET PROCÉDÉ DE CONTRÔLE DE FIXATION POUR ÉLÉMENT COMPOSITE

(30) Priority: 01.11.2012 JP 2012242229
(43) Date of publication of application: 09.09.2015
(73) Proprietor: Mitsubishi Heavy Industries, Ltd., Tokyo 108-8215 (JP)
(72) Inventor: IKEDA Yusuke, Tokyo 108-8215 (JP); KITAGAWA Tomoaki, Tokyo 108-8215 (JP)
(74) Representative: Henkel, Breuer & Partner
(86) International application number: PCT/JP2013/079135
(87) International publication number: WO 2014/069402

(56) References cited:
- JP-A- H07 266 147
- JP-A- 2006 516 009
- JP-A- 2007 203 307
- JP-A- 2008 264 930
- JP-A- 2009 085 250
- US-A- 4 220 275
- US-A- 4 620 656
- US-A1- 2003 063 291
- US-A1- 2011 166 824

## Description

### Technical Field

The present invention relates to a fastening control system of composite members and a fastening control method of composite members.

### Background Art

A fastener is used to fasten members of a workpiece. A hole for the fastener to be inserted is formed in the workpiece to be fastened. The fastener is inserted in the hole and the workpiece is fastened.

JP 2007-203307A discloses a riveting unit which joins the members of the workpiece. The riveting unit controls a push-in quantity when a rivet is pushed into the members of the workpiece, based on the thickness of the workpiece. Thus, the surface of the rivet and the surface of the workpiece can be made flush.

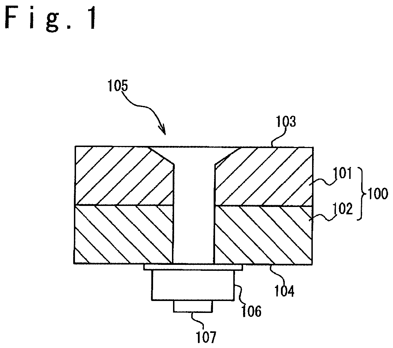

FIG. 1 shows the workpiece 100 to be fastened by a fastener 107 and a nut 106. The fastener 107 contains a countersunk bolt. The workpiece 100 contains stacked composite members 101 and 102. A hole with a countersink (i.e. fastener hole) 105 is formed in the workpiece 100 to pass from one 103 of the surfaces of the workpiece to the other surface 104. A countersink part of the fastener hole 105 is arranged on the side of the surface 103. The method of fastening the workpiece 100 includes arranging the fastener 107 in the fastener hole 105 and attaching a nut 106 to the fastener 107.

In recent years, a case increases which the composite member such as fiber reinforced plastics is used instead of a metal part. For example, many composite members are used for an aircraft.

US 4620656 discloses an automatic rivet feeding system for reliable delivery of plural rivet sizes with respect to a workpiece thickness at each rivet location. The system includes means for directly measuring certain parameters of the rivet process including the hole diameter on the workpiece. As the consequence of the measuring of the parameters including the hole diameter, a suitable one out of a plurality of available rivets stored in respective magazines or feeding devices is automatically selected and guided to be attached to the hole.

US 2011/0166824 A1 discloses a hole measurement apparatus for measuring a fastener hole depth, length, countersink depth and/or hole diameters in a workpiece.

US 2003/0063921 A1 discloses another apparatus for measuring characteristics of a hole without contacting the hole.

US 4220275 discloses a fastener selection system for sensing a composite thickness of plurality of pieces and for determining which of a plurality of available fastener sizes it is appropriate for joining the workpieces, and generating a signal representing the appropriate fastener size.

### Summary of the Invention

It is easy for the composite member to be deformed, compared with a metal member. When a part 101 or a part 102 is a composite member, it could be considered that the workpiece 100 is deformed in case of forming of the fastener hole 105. As a result, the shape of the fastener hole 105 is sometimes lost. When the fastener 107 with a size determined previously based on design data is inserted in the fastener hole 105, the shape of the fastener 107 does not sometimes fit with the actual shape of the fastener hole 105 due to any deformation. When the shape does not fit, the fastener 107 is removed and the fastening work must be carried out again. In case of the workpiece which contains the composite member for the aircraft, because a request for selection of the fastener is especially high, the degradation of the efficiency of the fastening work is remarkable. For the above reason, it is difficult to attain both of the selection of a suitable fastener and the improvement of the work efficiency, when the workpiece contains the composite members.

Therefore, an object of the present invention is to provide a fastening control system of composite members and a fastening control method of composite members, in which the shape of a fastener can be made fit with an actual shape of a fastener hole, even if a workpiece contains the composite member.

A fastening control system of composite members according to the present invention includes the features of claim 1. A fastening control method of composite members according to the present invention includes the features of claim 9. A computer-readable storage medium according to the present invention includes the features of claim 10.

According to the present invention, a fastening control system of composite members and a fastening control method of composite members are provided, in which the shape of a fastener can be made fit with an actual shape of a fastener hole, even if a workpiece contains the composite member.

### Brief Description of the Drawings

FIG. 1 is a diagram showing a workpiece to be fastened.
FIG. 2 is a diagram schematically showing a manufacturing system according to a first embodiment.
FIG. 3 is a diagram schematically showing each of a plurality of fastener holes.
FIG. 4 is a conceptual diagram showing an example of shape data.
FIG. 5 is a diagram showing an example of a method of detecting a countersink depth d.
FIG. 6 is a diagram schematically showing a fastener.
FIG. 7 is a diagram schematically showing a hit fastener.
FIG. 8 is a diagram schematically showing a fastener in a fastening process.
FIG. 9 is a conceptual diagram showing an example of drawing data.
FIG. 10 is a conceptual diagram showing fastener size data.
FIG. 11 is a conceptual diagram showing work sequence data.
FIG. 12 is a diagram schematically showing a relation of a job and a fastener hole.
FIG. 13 is a functional block diagram showing a control system.
FIG. 14 is a conceptual diagram showing an example of result data.
FIG. 15 is a conceptual diagram showing an example of a use quantity data.
FIG. 16 is a flow chart showing an operating method of the control system.
FIG. 17 is a conceptual diagram showing an example of a KIT instruction.
FIG. 18 is a conceptual diagram showing a riveting instruction.

### Description of Embodiments

Hereinafter, the embodiments of the present invention will be described with reference to the attached drawings.

### [First embodiment]

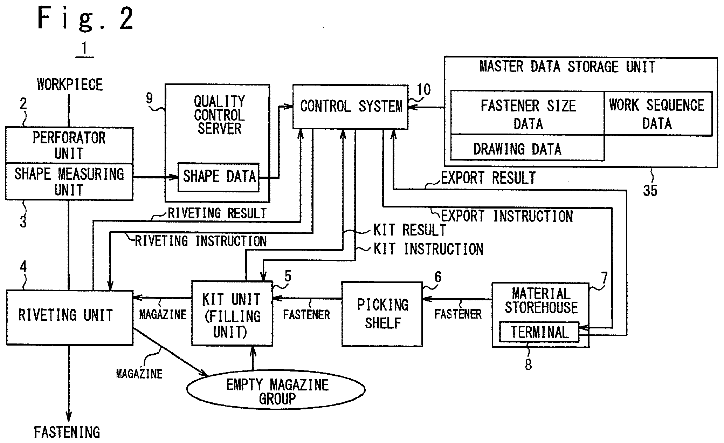

FIG. 2 is a diagram schematically showing a manufacturing system 1 according to a first embodiment. As shown in FIG. 2, the manufacturing system 1 includes a perforator unit 2, a shape measuring unit 3, a riveting unit 4, a kIT unit 5 (filling unit), a quality control server 9, a control system 10 (a fastening control system of a composite member), and a master data storage unit 35.

The manufacturing system 1 is used to fasten a workpiece containing two or more members to be fastened. The workpiece contains a composite member such as fiber reinforced plastics, and is a member used to form a main wing of an aircraft.

A plurality of fastener holes are formed in the workpiece by the perforator unit 2. After the plurality of fastener holes are formed, the shape of each fastener hole is measured by the shape measuring unit 3. Then, a fastener is riveted in each fastener hole by the riveting unit 4. That is, the fastener is inserted and hit in each fastener hole. Then, the fastener inserted is fastened by a nut and so on in a fastening process. Thus, the workpiece is fastened.

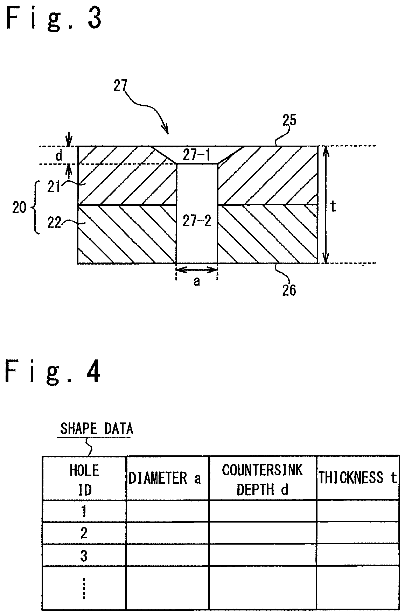

The perforator unit 2 forms the plurality of fastener holes in the workpiece. FIG. 3 is a diagram schematically showing each of the plurality of fastener holes 27. As shown in FIG. 3, the workpiece 20 has a laminate structure of a composite member 21 and a composite member 22. Each fastener hole 27 is formed to pass from one 25 of the surfaces of the workpiece 20 to the other surface 26. The fastener hole 27 has a countersink section 27-1 and a constant section 27-2. An upper end of the countersink section 27-1 is an opening disposed in the surface 25. The countersink part 27-1 extends from the surface 25 toward the surface 26 as the diameter of the countersink section 27-1 becomes small. The constant section 27-2 is a portion with a constant diameter. The constant section 27-2 is connected with the bottom of the countersink section 27-1 in its upper end. A bottom end of the constant section 27-2 is an opening disposed in the surface 26.

The shape measuring unit 3 (reference FIG. 2) has a function of measuring the shape of the fastener hole 27. The shape measuring unit 3 measures a thickness t of the workpiece 20, a countersink depth d and a hole diameter a, as the shape of fastener hole 27. The measurement result is notified to the quality control server 9 as shape data.

FIG. 4 is a conceptual diagram showing an example of the shape data. As shown in FIG. 4, the shape data shows a correspondence relation of a hole ID which specifies the fastener hole 27, the hole diameter a, the countersink depth d and the thickness t.

For example, the shape measuring unit 3 measures the hole diameter a and the thickness t by using a hole diameter measuring unit (not shown). That is, the shape measuring unit 3 inserts the hole diameter measuring unit (not shown) in the fastener hole 27 and measures the hole diameter while moving it along a depth direction. When the hole diameter measuring unit protrudes from the fastener hole 27, a measured value of the hole diameter a ranges out. Therefore, the shape measuring unit 3 can measure the thickness t by determining a depth when the measure value ranges out, in addition to the hole diameter a.

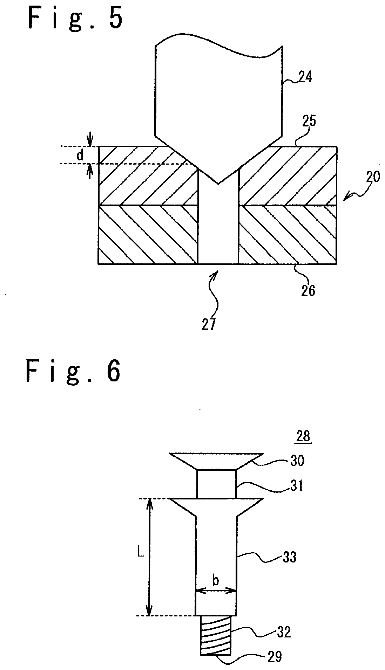

Also, for example, as shown in FIG. 5, the shape measuring unit 3 detects the countersink depth d based on an actual feed quantity of a countersink forming tool 24 of the perforator unit 2. The shape measuring unit 3 may detect the countersink depth d based on an instruction value of a feed quantity of the countersink forming tool 24. Also, the shape measuring unit 3 can detect the countersink depth d by another means.

The riveting unit 4 (reference FIG. 2) has a function of inserting the fastener in each fastener hole 27 and riveting (hitting). A magazine (a container) in which a plurality of fasteners are loaded is attached to the riveting unit 4. The riveting unit 4 inserts each fastener loaded in the magazine in the fastener hole 27 and hits it. Note that there is a case where the riveting unit 4 cannot be used, depending on the position where the fastener hole 27 has been formed. In such a case, a worker inserts the fastener directly from the magazine.

With reference to FIG. 6, the fastener 28 will be described. FIG. 6 is a diagram schematically showing an example of the fastener 28. The fastener 28 has a countersunk bolt 29 and a sleeve 33. The sleeve 33 has a circular cylindrical shape. The countersunk bolt 29 is inserted in the sleeve 33. The countersunk bolt 29 has a countersink head 30, a circular column section 31 and a screw section 32. The circular column section 31 is disposed between the countersink head 30 and the screw section 32. A screw is not formed in the circular column section 31. The sleeve 33 is provided to cover the circular column section 31. The length of the sleeve 33 in an axial direction is called a grip length L of the fastener 28. Also, the outer diameter of the sleeve 33 is called a fastener diameter b.

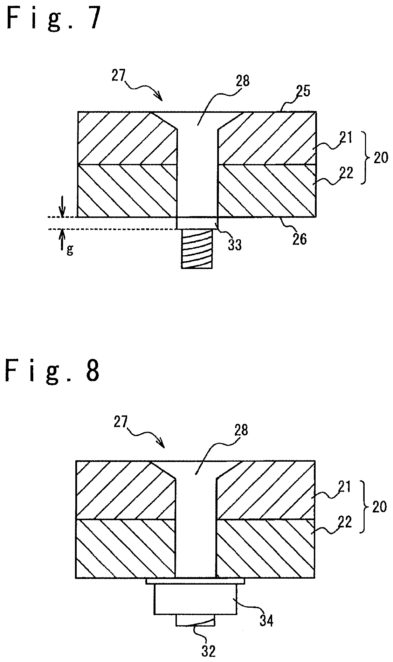

FIG. 7 is a diagram schematically showing the fastener 28 driven into the fastener hole 27. The riveting unit 4 inserts the fastener 28 in the fastener hole 27 and hits the fastener 28 by using an air hammer and so on. As shown in FIG. 7, a protrusion quantity of the sleeve 33 from the surface 26 is called a protrusion quantity g.

After hitting the fastener 28, the workpiece 20 is fastened in the fastening process. FIG. 8 is a diagram schematically showing the fastener 28 in the fastening process. As shown in FIG. 8, a nut 34 is attached to the screw section 32, and the composite member 21 and the composite member 22 are fastened.

The kIT unit 5 (reference FIG. 2) is a unit for loading a plurality of fasteners 28 in a magazine. As shown in FIG. 2, the kIT unit 5 selects a magazine for fasteners to be loaded from an empty magazine group. Then, the kIT unit 5 loads the fasteners 28 into the selected magazine from a picking shelf 6. The fasteners exported from a material storehouse 7 are kept in the picking shelf 6. A terminal 8 is arranged in the material storehouse 7.

The master data storage unit 35 (reference FIG. 2) stores master data prepared previously. For example, the master data storage unit 35 is realized by a hard disk and so on. The master data contains fastener size data, drawing data and work sequence data.

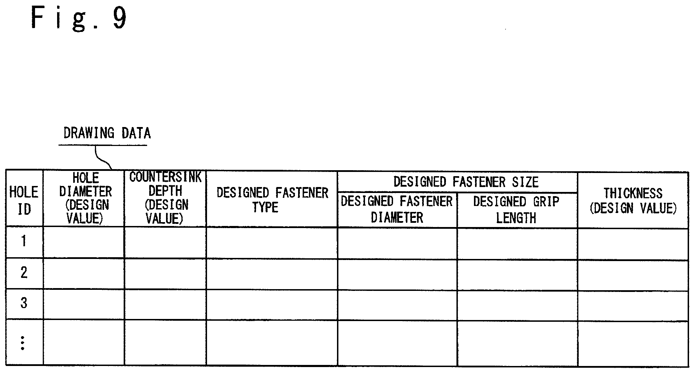

FIG. 9 is a conceptual diagram showing an example of the drawing data. The drawing data is so-called design data. As shown in FIG. 9, the drawing data shows a correspondence relation of the hole ID, a design value of the hole diameter, a design value of the countersink depth, a fastener type (designed fastener name), a designed fastener size (designed fastener diameter, designed grip length) and a designed value of the thickness. Note that the structure and size of the fastener have been determined for every fastener type. That is, if a fastener type is specified, the structure and size of the fastener are specified.

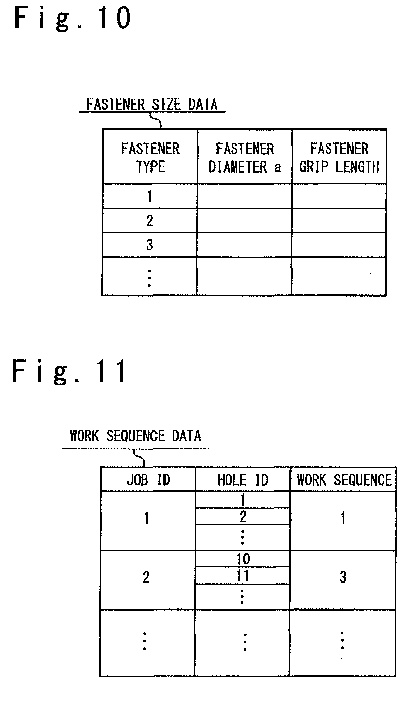

FIG. 10 is a conceptual diagram showing fastener size data. As shown in FIG. 10, the fastener size data shows a correspondence relation of the fastener type, the fastener diameter and the grip length L.

FIG. 11 is a conceptual diagram showing work sequence data. As shown in FIG. 11, the work sequence data shows a relation of a job ID which specifies a job, the hole ID and a work sequence. The work sequence is set for every job.

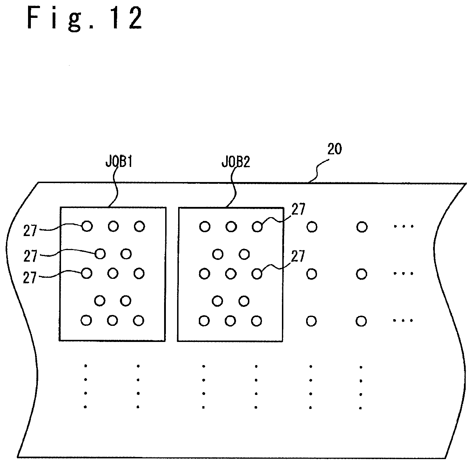

Here, the job will be described. FIG. 12 is a diagram schematically showing a relation of the jobs and the fastener holes 27. As mentioned previously, the plurality of fastener holes 27 are formed in the workpiece 20. The plurality of fastener holes 27 are classified into a plurality of jobs. Each job is a set of the fastener holes 27 in which the plurality of fastener 28 loaded in one magazine are inserted. That is, the plurality of fasteners loaded in one magazine are inserted and driven in the plurality of fastener holes 27 which are contained in one job.

Next, the control system 10 (reference FIG. 2) will be described. The control system 10 has a function of determining the fastener size suitable for each fastener hole 27 (suitable fastener size) based on the shape data. Also, the control system 10 has a function of transmitting an instruction (a KIT instruction and a riveting instruction) to the kIT unit 5 and the riveting unit 4 so that the fastener (suitable fastener) having the suitable fastener size is inserted and riveted in each the fastener hole 27. Thus, even if the shape of each fastener hole 27 is deviated slightly from the design value, the workpiece can be fastened by using the fastener suitable for the actual shape of each fastener hole 27. Also, the control system 10 has a function of issuing an export instruction to the terminal 8 disposed in the material storehouse 7 so as to export the fasteners from the material storehouse 7 to the picking shelf 6.

Hereinafter, the control system 10 will be described in detail.

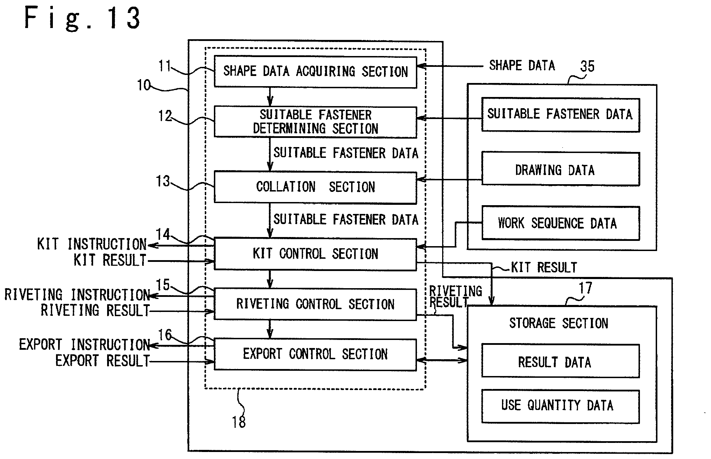

FIG. 13 is a functional block diagram showing the control system 10. The control system 10 includes a shape data acquiring section 11, a suitable fastener determining section 12, a collating section 13, a KIT control section 14, a riveting control section 15, an export control section 16 and a storage section 17. Of them, the shape data acquiring section 11, the suitable fastener determining section 12, the collating section 13, the KIT control section 14, the riveting control section 15 and the export control section 16 are realized by a CPU (not shown) executing a fastening control program 18 which is stored in ROM (Read Only Memory). On the other hand, the storage section 17 is realized by a recording medium such as a hard disk.

The shape data acquiring section 11 has a function of acquiring the shape data (reference FIG. 4) from the quality control server 9.

The suitable fastener determining section 12 has a function of determining the suitable fastener size for each of the plurality of fastener holes 27 based on the shape data and the fastener size data, and generating the suitable fastener data showing the determining result.

The collating section 13 has a function of collating the suitable fastener data with the drawing data, and determining whether a difference between the suitable fastener size and the designed fastener size is within a permissible range.

The KIT control section 14 has a function of determining a work object job based on the work sequence data, and generating the KIT instruction so that the fastener (suitable fastener) which has the suitable fastener size is loaded in the magazine. Also, the KIT control section 14 has a function of acquiring the KIT result data showing the results of the loading work.

The riveting control section 15 has a function of generating the riveting instruction so that the suitable fastener loaded in the magazine is inserted and hit in a corresponding fastener hole 27. Also, the riveting control section 15 has a function of acquiring the riveting result data showing the results of the riveting work.

The export control section 16 has a function of generating the export instruction so that the fastener is exported from the material storehouse 7 to the picking shelf 6 (reference FIG. 2). Also, the export control section 16 has a function of acquiring the export result data showing the results of the export work.

The storage section 17 stores the result data and use quantity data.

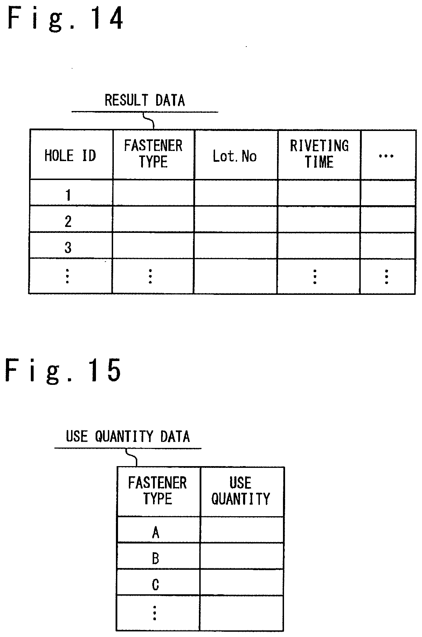

FIG. 14 is a conceptual diagram showing an example of the result data. The result data is data showing the results (history) of the loading (KIT) work and the results (history) of the riveting work. In an example shown in FIG. 14, the result data shows a correspondence relation of the hole ID, the fastener type of the hit fastener, Lot No. of the hit fastener, and a riveting time.

FIG. 15 is a conceptual diagram showing an example of the use quantity data. In an example shown in FIG. 15, the use quantity data shows a relation of the fastener type and the use quantity. The use quantity shows the number of fasteners loaded in the magazine from the picking shelf 6.

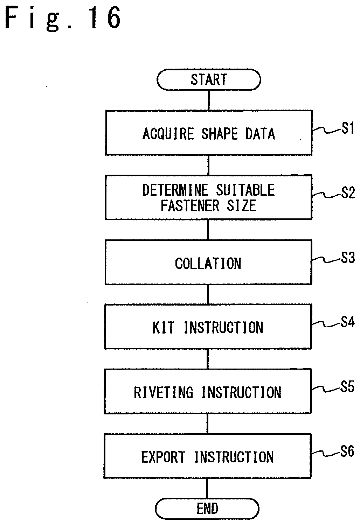

FIG. 16 is a flow chart showing an operating method of the control system 10. With reference to FIG. 16, the operating method of the control system 10 will be described.

### Step S1: Acquisition of shape data

First, the shape data (reference FIG. 4) is acquired from the quality control server 9 by the shape data acquiring section 11.

### Step S2: Determining of suitable fastener size

Next, the suitable fastener determining section 12 determines the suitable fastener size for each of the plurality of fastener holes 27 based on the shape data. At this time, the suitable fastener determining section 12 refers to the fastener size data (FIG. 10) to determine the suitable fastener size. In the present embodiment, the suitable fastener diameter aopt and the suitable grip length Lopt are determined as the suitable fastener size.

Specifically, the suitable fastener determining section 12 selects a fastener type group in which the fastener diameter a does not exceed the hole diameter d of the fastener hole 27, from the fastener-type groups described in the fastener size data (reference FIG. 10). Moreover, the suitable fastener determining section 12 selects a fastener type having the maximum fastener diameter a from the selected fastener type group and determines the fastener diameter as the suitable fastener diameter aopt. That is, the suitable fastener diameter aopt is the maximum diameter among the diameters which do not exceed the diameter of the fastener hole 27.

Also, the suitable fastener determining section 12 selects the fastener type group in which a protrusion quantity g (reference FIG. 7) of the fastener does not exceed a previously set permissible value when being inserted in the fastener hole 27, from the fastener type groups described in the fastener size data (reference FIG. 10). Note that the protrusion quantity g may be determined based on the grip length L and the thickness t. Moreover, the suitable fastener determining section 12 selects the fastener type with the largest grip length L from the selected fastener type group and determines the grip length L of the selected fastener type as the suitable grip length Lopt.

The suitable fastener determining section 12 generates the suitable fastener data showing the suitable fastener size and notifies to the collating section 13.

### Step S3: Collation

Next, the collating section 13 collates the suitable fastener size with the drawing data (reference FIG. 9).

The suitable fastener size is determined to suit to the shape of the fastener hole 27 actually formed, as mentioned above. However, it is not desirable that the suitable fastener size is greatly different from the design value (the designed fastener size). Therefore, the collating section 13 determines whether a difference between the suitable fastener size and the designed fastener size is within a previously set permissible range. That is, the collating section 13 determines whether the difference between the suitable fastener diameter aopt and the designed fastener diameter is within a previously set permissible range. Also, the collating section 13 determines whether the difference between the suitable grip length Lopt and the designed grip length is within a previously set permissible range.

Note that when the difference between the suitable fastener size and the designed fastener size is outside of the permissible range, the collating section 13 outputs an error message to the output unit (not shown) and prompts the confirmation to the worker.

On the other hand, when the difference between the suitable fastener size and the designed fastener size is within the permissible range, the collating section 13 notifies a check result and the suitable fastener data to the KIT control section 14.

The suitable fastener size is determined and collated for each of the plurality of fastener holes 27 in the above processing.

### Step S4: KIT instruction

Next, the KIT control section 14 generates the KIT instruction based on the suitable fastener data. The KIT instruction is an instruction to load a fastener group into the magazine attached to the riveting unit 4.

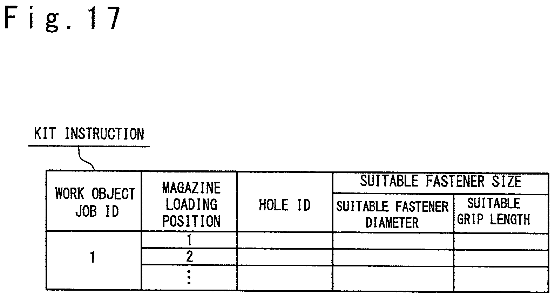

FIG. 17 is a conceptual diagram showing an example of the KIT instruction. In an example shown in FIG. 17, the KIT instruction shows a correspondence relation of the work object job ID, a magazine loading position, the hole ID and the suitable fastener size (the suitable fastener diameter and the suitable grip length).

Specifically, the KIT control section 14 refers to the work sequence data (reference FIG. 11) and determines the job to be worked next as the work object job. The KIT control section 14 determines the loading position of the fastener in the magazine for each of the plurality of fastener holes 27 contained in the work object job. Then, the KIT control section 14 generates data showing a correspondence relation of the work object job, the magazine loading position, the hole ID and the suitable fastener size as the KIT instruction.

The KIT control section 14 notifies the KIT instruction to the kIT unit 5 (reference FIG. 2). In the kIT unit 5, the magazine as the loading object is selected from among an empty magazine group. According to the KIT instruction, a plurality of fasteners are loaded into the magazine as the loading object from the picking shelf 6. That is, the suitable fastener corresponding to each fastener hole which is contained in the work object job is loaded in the selected magazine.

When the loading work ends, the kIT unit 5 generates the KIT result data showing the loading results and notifies to the KIT control section 14. At this time, the magazine ID which specifies the magazine selected as the loading object magazine, and data showing Lot. No of the loaded fastener are contained in the KIT result data. The KIT control section 14 updates the result data (FIG. 14) based on the KIT result data.

Note that the loading work does not have to be always carried out by the kIT unit 5 and may be performed by the worker. In this case, the KIT control section 14 issues the KIT instruction to a KIT terminal (not shown) which is realized by a computer and so on. The worker refers to the KIT instruction by use of the KIT terminal and loads a plurality of fasteners into the magazine as the loading object. After the loading operation, the worker transmits the KIT result data to the KIT control section 14 through the KIT terminal. Thus, the KIT control section 14 can update the result data (FIG. 14) based on the KIT result data.

### Step S5: Riveting instruction

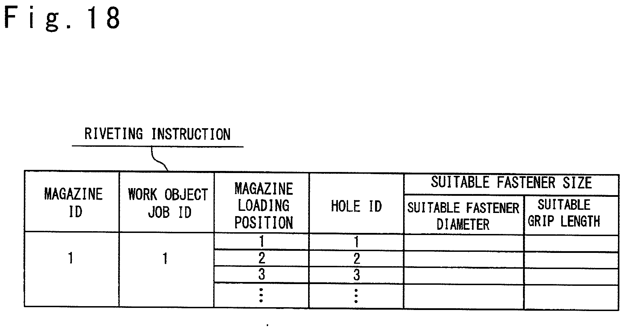

Next, the riveting control section 15 generates a riveting instruction such that the fastener with the suitable fastener size is inserted in each fastener hole 27. FIG. 18 is a conceptual diagram showing the riveting instruction. As shown in FIG. 18, the riveting instruction shows a correspondence relation of the magazine ID, the work object job ID, the magazine loading position, the hole ID and the suitable fastener size (suitable fastener diameter, suitable grip length). The riveting control section 15 generates the riveting instruction by acquiring the data showing the magazine ID for identifying the selected magazine from the KIT control section 14 and giving this to the KIT instruction. The riveting control section 15 notifies the generated riveting instruction to the riveting unit 4 (reference FIG. 2).

The riveting unit 4 inserts and hits the fastener 28 in each fastener hole 27 contained in the work object job from the corresponding magazine according to the correspondence relation mentioned in the riveting instruction. Specifically, the magazine corresponding to the work object job is attached to the riveting unit 4. The riveting unit 4 moves onto the plurality of fastener holes contained in the work object job. After the movement, the fastener with the suitable fastener size is inserted and hit in each fastener hole 27 from the magazine of the riveting unit 4.

When the insertion and the hitting are completed in the work object job, the riveting unit 4 generates the riveting result data showing riveting results and notifies to the riveting control section 15. The riveting control section 15 updates the result data (reference FIG. 14) based on the riveting result data. In an example shown in FIG. 14, the data showing a riveting time is notified to the riveting control section 15 as the riveting result data from the riveting unit 4 and is reflected on the result data.

Note that when the riveting unit 4 does not have a function of moving, the worker moves the riveting unit 4 onto the plurality of fastener holes contained in the work object job. In this case, the riveting control section 15 sends the riveting instruction to the riveting terminal (not shown) which is realized by the computer and so on. The worker refers to the riveting instruction through the riveting terminal, attaches the magazine corresponding to the work object job to the riveting unit 4, installs the riveting unit 4 onto the work object job and carries out the riveting operation by the riveting unit 4. Because it is enough to install the riveting unit 4 attached with the magazine onto the work object job, there are few work load to be carried out by the worker. After the riveting operation, the worker notifies the riveting result data to the riveting control section 15 through the riveting terminal.

Note that result data (FIG. 14) is read according to need and it is determined whether or not the work is carried out in the previously set condition.

### Step S6: Export instruction

In step S4, when the fasteners are loaded in the magazine from the picking shelf 6, the number of fasteners arranged on the picking shelf 6 decreases. When no fastener with the suitable fastener size exists on the picking shelf 6, the fastening work cannot be carried out. Therefore, the export control section 16 determines whether or not it is necessary to move the fasteners from the material storehouse to a fastener safekeeping section based on the use quantity data (FIG. 15) stored in the storage section 17. When it is determined that it is necessary, the export control section 16 generates the export instruction such that the fasteners are exported from the material storehouse 7 to the picking shelf 6 (to be moved). Note that the use quantity data is updated when the KIT control section 14 acquires the KIT result data, for example.

The export instruction is notified to the terminal 8 (reference FIG. 2) which is provided in the material storehouse 7. In the material storehouse 7, the worker acquires the export instruction through the terminal 8 and according to the export instruction, the worker moves the fasteners to the picking shelf 6.

As described above, according to the present embodiment, the suitable fastener size is determined so as to suit the actual shape of each fastener hole 27. Therefore, it is not necessary to measure the shape of the workpiece after the riveting, and to confirm whether or not an appropriate fastener is used, the work process can be reduced.

Also, according to the present embodiment, the suitable fastener size is collated with the design fastener size by the collating section 13. Therefore, it is prevented that the fastener having the size greatly different from the design value is used.

Also, according to the present embodiment, because the export control section 16 is provided, the number of fasteners kept in the picking shelf 6 can be kept.

## Claims

1. A fastening control system (10) for fastening composite members (21,22) for an aircraft, comprising:
a shape data acquiring section (11) configured to acquire shape data showing a measurement value of a shape of a fastener hole (27) formed in a workpiece of the composite members (20,21);
a suitable fastener determining section (12) configured to determine as a suitable fastener size, a size of a fastener (28) suitable for the fastener hole (27) based on the shape data, and to generate suitable fastener data showing the suitable fastener size, the suitable fastener size including a suitable fastener diameter; and
a collating section (13) configured to collate the suitable fastener data and drawing data which is previously prepared design data,
wherein the drawing data is configured to show a designed fastener size which is a design value of the size of the fastener to be inserted in the fastener hole (27), the designed fastener size including a designed fastener diameter, and
wherein said collating section (13) is configured to determine whether or not a difference between the suitable fastener diameter and the designed fastener diameter is within a previously set permissible range.

2. The fastening control system (10) according to claim 1, wherein the suitable fastener determining section (12) is configured to determine a maximum fastener diameter as the suitable fastener diameter from among the fastener diameters which are smaller than a measurement value of the hole diameter of the fastener hole (27).

3. The fastening control system (10) according to claim 1, wherein the suitable fastener determining section (12) is configured to determine as a grip length of the suitable fastener size, a maximum grip length from among grip lengths such that a protrusion quantity (g) after insertion of such fastener in the fastener hole (27) does not exceed a previously set permission value.

4. The fastening the control system (10) according to any of claims 1 to 3, further comprising:
a loading control section (14) configured to generate a load instruction such that a suitable fastener having the suitable fastener size is loaded in a magazine attached to a riveting unit (4); and
a riveting control section (15) configured to generate a riveting instruction such that the suitable fastener is inserted and riveted in the fastener hole (27) from the magazine.

5. The fastening control system (10) according to claim 4, wherein a plurality of fastener holes (27) are formed in the workpiece (20),
wherein the loading control section (14) is configured to acquire data showing a magazine ID for specifying the magazine loaded with the suitable fastener as load result data, when the suitable fastener is loaded in the magazine, and
wherein said riveting control section (15) is configured to generate the riveting instruction based on the load result data such that the suitable fastener is inserted in a corresponding fastener hole (27) of the plurality of fastener holes (27).

6. The fastening control system (10) according to claim 4 or 5, wherein the loading control section is configured to acquire data showing a lot number of the loaded suitable fastener, when the suitable fastener is loaded in the magazine, and to store data showing a correspondence relation of the fastener hole (27) and the lot number in a storage unit as result data.

7. The fastening control system (10) according to claim 4, further comprising:
an export control section (16); and
a storage section (17) configured to store use quantity data showing the number of fasteners loaded in the magazine,
wherein the loading control section (14) is configured to issue an instruction to load the suitable fastener from a fastener safekeeping section to the magazine,
wherein the export control section (16) is configured to determine whether or not it is necessary to move the fasteners from a material storehouse (7) to the fastener safekeeping section based on the use quantity data, and to generate an instruction based on the determining result.

8. The fastening control system (10) according to any of claims 1 to 7, wherein the fastener hole (27) is a hole having a countersunk section (27-1).

9. A fastening control method for fastening composite members (21,22), comprising:
acquiring (S1) shape data showing a shape of a fastener hole (27) formed in a workpiece (20) of the composite members (21,22) ;
determining (S2) as a suitable fastener size, a fastener size for the fastener hole (27) based on the shape data, the suitable fastener size including a suitable fastener diameter;
generating suitable fastener data showing the suitable fastener size including the suitable fastener diameter; and
collating (S3) the suitable fastener data and drawing data which is previously prepared design data,
wherein the drawing data shows a designed fastener size which is a design value of the size of the fastener (28) to be inserted in the fastener hole (27), the designed fastener size including a designed fastener diameter, and
wherein said collating (S3) comprises determining whether or not a difference between the suitable fastener diameter and the designed fastener diameter is within a previously set permissible range.

10. A non-transitory computer-readable storage medium which stores a fastening control program that, when being executed by a computer, can realize the functions of the fastening control method according to claim 9.

## Patentansprüche

1. Ein Befestigungssteuersystem (10) zum Befestigen von Verbundelementen (21,22) für ein Luftfahrzeug, mit:
einem Formdaten-Akquirierungsabschnitt (11), der konfiguriert ist, um Formdaten zu akquirieren, die einen Messwert einer Form eines Befestigerlochs (27), das in einem Werkstück der Verbundelemente (20,21) ausgebildet ist, zeigen,
einem Bestimmungsabschnitt für einen geeigneten Befestiger (12), der konfiguriert ist, um als eine geeignete Befestigergröße eine Größe eines Befestigers (28) basierend auf den Formdaten zu bestimmen, der für das Befestigerloch (27) geeignet ist, und um geeignete Befestigerdaten zu erzeugen, die die geeignete Befestigergröße zeigen, wobei die geeignete Befestigergröße einen geeigneten Befestigerdruchmesser umfasst, und
einen Zuordnungsabschnitt (13), der konfiguriert ist, um die geeigneten Befestigerdaten und Zeichnungsdaten, die vorab vorbereitete Auslegungsdaten sind, zuzuordnen,
wobei die Zeichnungsdaten konfiguriert sind, um eine ausgelegte Befestigergröße zu zeigen, die ein Auslegungswert der Größe des Befestigers, der in das Befestigerloch (27) einzusetzen ist, ist, wobei die ausgelegte Befestigergröße einen ausgelegten Befestigerdurchmesser aufweist, und
wobei der Zuordnungsabschnitt (13) konfiguriert ist, um zu bestimmen, ob eine Differenz zwischen dem geeigneten Befestigerdurchmesser und dem ausgelegten Befestigerdurchmesser in einem zuvor eingestellten zulässigen Bereich ist oder nicht.

2. Das Befestigungssteuersystem (10) gemäß Anspruch 1, wobei der Bestimmungsabschnitt für den geeigneten Befestiger (12) konfiguriert ist, um einen maximalen Befestigerdurchmesser als den geeigneten Befestigerdurchmesser aus den Befestigerdurchmessern zu bestimmen, die kleiner sind als ein Messwert des Lochdurchmessers des Befestigerlochs (27).

3. Das Befestigungssteuersystem (10) gemäß Anspruch 1, wobei der Bestimmungsabschnitt für den geeigneten Befestiger (12) konfiguriert ist, um als eine Grifflänge der geeigneten Befestigergröße eine maximale Grifflänge von Grifflängen so zu bestimmen, dass eine Vorsprunggröße (g) nach dem Einsetzen eines solchen Befestigers in das Befestigerloch (27) einen zuvor festgesetzten zulässigen Wert nicht übersteigt.

4. Das Befestigungssteuersystem (10) gemäß einem der Ansprüche 1 bis 3, ferner mit:
einem Beladungssteuerabschnitt (14), der konfiguriert ist, um eine Beladungsinstruktion so zu erzeugen, dass ein geeigneter Befestiger mit der geeigneten Befestigergröße in ein an einer Nieteinheit (4) angebrachtes Magazin geladen wird, und
einem Nietsteuerabschnitt (15), der konfiguriert ist, um eine Nietinstruktion so zu erzeugen, dass der geeignete Befestiger in das Befestigerloch (27) von dem Magazin eingesetzt und genietet wird.

5. Das Befestigungssteuersystem (10) gemäß Anspruch 4, wobei eine Vielzahl von Befestigerlöchern (27) in dem Werkstück (20) ausgebildet sind oder werden,
wobei der Beladungssteuerabschnitt (14) konfiguriert ist, um Daten zu akquirieren, die eine Magazin-Identifikation zum Angeben des mit dem geeigneten Befestiger beladenen Magazins als Beladungsergebnisdaten zeigen, wenn der geeignete Befestiger in das Magazin geladen ist, und
wobei der Niet-Steuerabschnitt (15) konfiguriert ist, um die Nietinstruktionen basierend auf den Beladungsergebnisdaten so zu erzeugen, dass der geeignete Befestiger in ein entsprechendes Befestigerloch (27) der Vielzahl von Befestigerlöchern (27) eingesetzt wird.

6. Das Befestigungssteuersystem (10) gemäß Anspruch 4 oder 5, wobei der Beladungssteuerabschnitt konfiguriert ist, um Daten zu akquirieren, die eine Losnummer des geladenen geeigneten Befestigers zeigen, wenn der geeignete Befestiger in das Magazin geladen ist, und um Daten zu speichern, die eine entsprechende Relation des Befestigerlochs (27) und der Losnummer in einer Speichereinheit als Ergebnisdaten zeigen.

7. Das Befestigungssteuersystem (10) gemäß Anspruch 4, ferner mit:
einem Exportsteuerabschnitt (16), und
einem Speicherabschnitt (17), der konfiguriert ist, um Verwendungsmengendaten zu speichern, die die Anzahl von in das Magazin geladenen Befestigern zeigen,
wobei der Beladungssteuerabschnitt (14) konfiguriert ist, um eine Instruktion zum Beladen des geeigneten Befestigers von einem Befestiger-Aufbewahrungsabschnitt zu dem Magazin auszugeben,
wobei der Export-Steuerabschnitt (16) konfiguriert ist, um zu bestimmen, ob es notwendig ist oder nicht, die Befestiger von einem Materiallager (7) zu dem Befestiger-Aufbewahrungsabschnitt zu bewegen, basierend auf den Verwendungsmengendaten, und um eine Instruktion basierend auf dem Bestimmungsergebnis zu erzeugen.

8. Das Befestigungssteuersystem (10) gemäß einem der Ansprüche 1 bis 7, wobei das Befestigerloch (27) ein Loch mit einem Senkabschnitt (27-1) ist.

9. Ein Befestigungssteuerverfahren zum Befestigen von Verbundelementen (21,22) mit:
Akquirieren (S1) von Formdaten, die eine Form eines Befestigerlochs (27) zeigen, das in einem Werkstück (20) der Verbundelemente (21,22) ausgebildet ist,
Bestimmen (S2) einer Befestigergröße als eine geeignete Befestigergröße für das Befestigerloch (27) basierend auf den Formdaten, wobei die geeignete Befestigergröße einen geeigneten Befestigerdurchmesser umfasst,
Erzeugen von Daten eines geeigneten Befestigers, die die geeignete Befestigergröße einschließlich des geeigneten Befestigerdurchmessers zeigen, und
Zuordnen (S3) der Daten des geeigneten Befestigers und von Zeichnungsdaten, die zuvor als Auslegungsdaten vorbereitet sind oder werden,
wobei die Zeichnungsdaten eine ausgelegte Befestigergröße zeigen, die ein Auslegungswert der Größe des Befestigers (28) ist, der in das Befestigerloch (27) einzusetzen ist, wobei die ausgelegte Befestigergröße einen ausgelegten Befestigerdurchmesser umfasst, und
wobei das Zuordnen (S3) ein Bestimmen umfasst, ob eine Differenz zwischen dem geeigneten Befestigerdurchmesser und dem ausgelegten Befestigerdurchmesser innerhalb eines zuvor eingestellen zulässigen Bereichs ist oder nicht.

10. Ein nicht flüchtiges computerlesbares Speichermedium, das ein Befestigungssteuerprogramm speichert, das, wenn es durch einen Computer ausgeführt wird, die Funktionen des Befestigungssteuerverfahrens gemäß Anspruch 9 realisiert.

## Revendications

1. Système (10) de réglage d'une fixation pour fixer des éléments (21, 22) composites d'un aéronef, comprenant :
une partie (11) d'acquisition d'une donnée de forme, configurée pour acquérir une donnée de forme montrant une valeur de mesure d'une forme du trou (27) de la fixation formé dans une pièce des éléments (20, 21) composites ;
une partie (12) de détermination d'une fixation appropriée, configurée pour déterminer une dimension appropriée d'une fixation, une dimension d'une fixation (28) appropriée au trou (27) de la fixation, reposant sur la donnée de forme, et pour produire une donnée appropriée de la fixation montrant la dimension appropriée de la fixation, la dimension appropriée de la fixation comprenant un diamètre approprié de la fixation et
une partie (13) de collationnement, configurée pour collationner la donnée appropriée de la fixation et une donnée de dessin, qui est une donnée de conception préparée antérieurement,
dans lequel la donnée de dessin est configurée pour montrer une dimension de conception de la fixation, qui est une valeur de conception de la dimension de la fixation à insérer dans le trou (27) de la fixation, la dimension de conception de la fixation comprenant un diamètre de conception de la fixation et
dans lequel la partie (13) de collationnement est configurée pour déterminer si ou non une différence entre le diamètre approprié de la fixation et le diamètre de conception de la fixation est dans une plage permise fixée auparavant.

2. Système (10) de commande d'une fixation suivant la revendication 1, dans lequel la partie (12) de détermination d'une fixation appropriée est configurée pour déterminer un diamètre maximum de la fixation, comme étant le diamètre approprié de la fixation parmi les diamètres de la fixation, qui sont plus petits qu'une valeur de mesure du diamètre du trou (27) de la fixation.

3. Système (10) de commande d'une fixation suivant la revendication 1, dans lequel la partie (12) de détermination d'une fixation appropriée est configurée pour déterminer une longueur de prise de la dimension appropriée de la fixation, une longueur maximum de prise parmi des longueurs de prise, telle qu'un montant (g) en saillie après insertion d'une fixation de ce genre dans le trou (27) de la fixation n'excédent pas une valeur permise fixée auparavant.

4. Système (10) de commande d'une fixation suivant l'une quelconque des revendications 1 à 3, comprenant, en outre :
une partie (14) de réglage de charge, configurée pour produire une instruction de charge, de manière à ce qu'une fixation appropriée, ayant la dimension appropriée de fixation, soit chargée dans un magasin fixé à une unité (4) de rivetage et
une partie (15) de réglage du rivetage, configurée pour produire une instruction de rivetage, de manière à ce que la fixation appropriée soit insérée et rivetée dans le trou (27) de la fixation à partir du magasin.

5. Système (10) de commande d'une fixation suivant la revendication 4, dans lequel une pluralité de trous (27) de fixation sont formés dans la pièce (20),
dans lequel la partie (14) de réglage de charge est configurée pour acquérir une donnée montrant une ID de magasin pour préciser le magasin chargé de la fixation appropriée, comme donnée de résultat de charge, lorsque la fixation appropriée est chargée dans le magasin et
dans lequel la partie (15) de réglage de rivetage est configurée pour produire l'instruction de rivetage sur la base de la donnée de résultat de charge, de manière à insérer la fixation appropriée dans un trou (27) de fixation correspondant de la pluralité de trous (27) de fixation.

6. Système (10) de commande d'une fixation suivant la revendication 4 ou 5, dans lequel la partie de réglage de charge est configurée pour acquérir une donnée représentant un numéro de lot de la fixation appropriée chargée, lorsque la fixation appropriée est chargée dans le magasin, et pour mettre en mémoire une donnée montrant une relation de correspondance entre le trou (27) de la fixation et le numéro de lot dans une unité d'emmagasinage, comme donnée de résultat.

7. Système (10) de commande d'une fixation suivant la revendication 4, comprenant, en outre :
une partie (16) de réglage de la sortie et
une partie (17) de mise en mémoire, configurée pour mettre en mémoire une donnée de quantité d'utilisation montrant le nombre de fixations chargées dans le magasin,
dans lequel la partie (14) de réglage de charge est configurée pour envoyer une instruction pour charger la fixation appropriée d'une partie de mise en sûreté de fixations au magasin,
dans lequel la partie (16) de réglage de la sortie est configurée pour déterminer s'il est nécessaire ou non de déplacer les fixations d'un dépôt (7) de matériel à la partie de mise en sûreté sur la base de la donnée de quantité d'utilisation et pour produire une instruction sur la base du résultat déterminé.

8. Système (10) de commande d'une fixation suivant l'une quelconque des revendications 1 à 7, dans lequel le trou (27) de fixation est un trou ayant une partie (27.1) fraisée.

9. Procédé de réglage d'une fixation pour fixer des éléments (21, 22) composites, comprenant :
acquérir (S1) une donnée de forme montrant une forme d'un trou (27) de fixation formé dans une pièce (20) des éléments (21, 22) composites ;
déterminer (S2) une dimension appropriée de la fixation, une dimension de la fixation du trou (27) de fixation reposant sur la donnée de forme, la dimension appropriée de la fixation comprenant un diamètre approprié de la fixation ;
produire une donnée de la fixation appropriée montrant la dimension appropriée de la fixation incluant le diamètre approprié de la fixation et
collationner (S3) la donnée de la fixation appropriée et une donnée de dessin, qui est une donnée de conception préparée antérieurement,
dans lequel la donnée de dessin montre une dimension de conception de la fixation, qui est une valeur de conception de la dimension de la fixation (28) à insérer dans le trou (27) de la fixation, la dimension de conception de la fixation comprenant un diamètre de conception de la fixation et
dans lequel le collationnement (S3) comprend déterminer si ou non une différence, entre le diamètre approprié de la fixation et le diamètre de conception de la fixation, est dans une plage permise fixée auparavant.

10. Support de mémoire non transitoire déchiffrable par ordinateur, qui met un programme de réglage d'une fixation en mémoire, qui, lorsqu'il est exécuté par un ordinateur, peut réaliser les fonctions du procédé de réglage d'une fixation suivant la revendication 9.
